Europäisches Patentamt

**European Patent Office**

Office européen des brevets

(11) Publication number: **0 230 327**
**A2**

## EUROPEAN PATENT APPLICATION

(21) Application number: **87200015.3**

(22) Date of filing: **07.01.87**

(51) Int. Cl.⁴: **H 04 N 7/087**

(30) Priority: **17.01.86 GB 8601175**

(43) Date of publication of application:
**29.07.87 Bulletin 87/31**

(84) Designated Contracting States: **DE FR GB**

(71) Applicant: **PHILIPS ELECTRONIC AND ASSOCIATED INDUSTRIES LIMITED**
**Arundel Great Court 8 Arundel Street**
**London WC2R 3DT (GB)**

(84) Designated Contracting States: **GB**

(71) Applicant: **N.V. Philips' Gloeilampenfabrieken**
**Groenewoudseweg 1**
**NL-5621 BA Eindhoven (NL)**

(84) Designated Contracting States: **DE FR**

(72) Inventor: **Ray, Prabal Kumar**
**PHILIPS CROYDON 19 Commerce Way Purley Way**
**Croydon CR9 4JA (GB)**

(74) Representative: **Boxall, Robin John et al**
**Philips Electronic and Associated Ind. Ltd. Patent Department Mullard House Torrington Place**
**London WC1E 7HD (GB)**

(54) Teletext transmission systems.

(57) A teletext decoder for a teletext transmission system has a logic processor which is programmed to descramble teletext information containing scrambled text and encrypted cipher messages. The logic processor operates according to a decoding method to decrypt various cipher keys and to use the decrypted cipher keys to descramble pages of teletext text. The decoding method involves a one-way function which is the same as that used for scrambling/encryption at the transmission end of the teletext system. Each byte of a teletext message is descrambled by exclusive-ORing it with a respective decode byte that is derived from the one-way function. Figure 2 illustrates the one-way function used.

Fig.1.

**Description**

"TELETEXT TRANSMISSION SYSTEMS"

The invention relates to teletext transmission systems. that is, systems of a type in which coded data pulses representing alpha-numeric text for display or other teletext information is transmitted in a television signal in television lines where no picture signals representing normal television picture information are present.

A teletext transmission system may be adapted for so-called "full-channel" operation in which all of the television lines of each field of a television signal are used for transmitting the coded data pulses. However, in existing teletext television systems operating in the United Kingdom and elsewhere only television lines in the field-blanking intervals are used for the transmission of coded data pulses, which are thus, in effect, multiplexed with the normal picture information in the television signal. The alpha-numeric text or other teletext information transmitted in this way can be received by a suitable teletext decoder. The received teletext information can be for display, for example, as a selectable alternative to the normal picture information by means of a suitably adapted television receiver arrangement which can acquire the coded data pulses from the television signal. Alternatively, the received teletext information can be for other usuage, for instance as computer software. A teletext transmission system can use over-air broadcast transmission, or it can use a cable as the transmission medium.

A teletext television system is described in United Kingdom patent specification 1 370 535. Also, the document "Broadcast Teletext Specification", September 1976, published jointly by the British Broadcasting Corporation, Independent Broadcasting Authority and British Radio Equipment Manufacturers Association, gives details of a specification on which are based the CEEFAX and ORACLE (Registered Trade Marks) teletext television systems operated in the United Kingdom by BBC and IBA respectively

In the above-identified publication "Broadcast Teletext Specification", a quantity of teletext information to be displayed as an entity on a television screen is termed a page and will be so termed hereinafter. All of the pages which are available for display are transmitted in a recurrent cycle, with or without updating page information as appropriate. At the adapted television receiver arrangement a viewer can request any page for display, the requested page being acquired from the cyclic transmission the next time it occurs therein and stored in a display memory of the television receiver arrangement for as long as the page is to be displayed. A page format consists of 24 data rows each having 40 character positions. The first data row (Row 0) of each page is termed a page-header and contains inter alia the page number. The transmission of each page begins with, and includes, its page-header and ends with, and excludes, the next page-header which is transmitted. Thus, it is assumed that all of the data rows which are transmitted between two successively transmitted page-headers belong to the page having the first page-header. This assumption avoids the need to include in each data row data for identifying the page to which the row belongs. However, because different groups (magazines) of pages use the same range of page numbers, so that more than one page can have the same page number, and because the pages from different magazines may have their data rows interleaved, each data row also includes data which identifies the magazine containing the page that the row belongs to. Each television line which is used for teletext transmission contains the entire data for one data row and is termed a data-line.

The data rows are themselves identified by respective row numbers which are transmitted in the rows and which determine the row positions in the relevant page. This enables the rows of a page to be transmitted in any order, following the page-header for the page, and rows not containing any information need not be transmitted. The row numbers are provided as respective 5-bit codes. Only 24 of the 32 possible 5-bit code combinations are required for identifying the 24 data rows, and it has been proposed that at least some of the 8 remaining 5-bit code combinations should be used to identify so-called "ghost" rows in each page. It is the intention that these ghost rows can be used to transmit auxiliary information which is not displayed but which is for processing by logic circuitry in the adapted television receiver arrangement to extend and/or enhance the facilities afforded by a teletext television system.

A recent proposal is for a conditional access teletext service; that is, a subscription teletext television system in which subscribers (i.e. their teletext decoders) are given a high security conditional access to transmitted teletext information by means of over-air broadcast addressing. The system will offer a range of services which can be subscribed for, and will provide unique addressing of a large number of individual subscribers. The teletext pages as transmitted will be scrambled using digital scrambling and encryption techniques and keys for decoding the transmitted teletext pages will be transmitted over-air.

The security of the system will rely on the integrity of the scrambling/descrambling and encryption/decryption procedures, and the handling and distribution of the keys(s) for decoding. The use of a single key fixed permanently for every subscriber's decoder would be subject to the possibility of discovery and subsequent misuse. Therefore, the key or keys used should be changed frequently. Also, different services will be made available to different subscribers according to their original choices, but the subsequent availability should also be conditional on subscription payments being made.

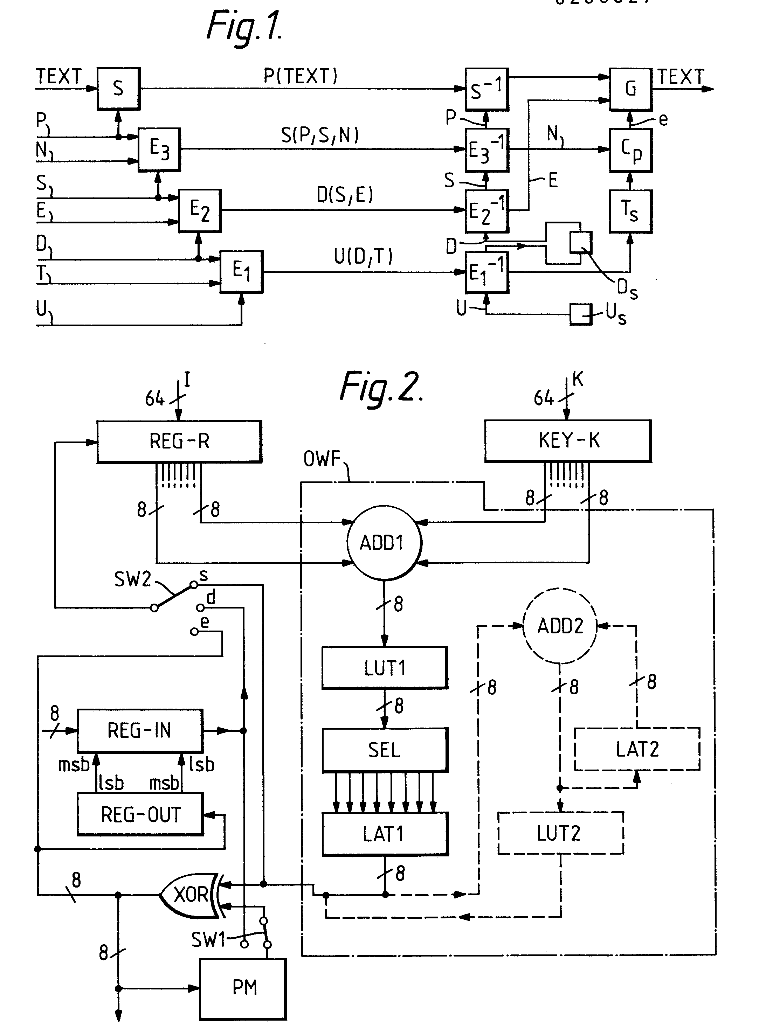

Figure 1 of the accompanying drawings shows diagrammatically the scrambling/descrambling and encryption/decryption steps for this proposed subscription teletext television system. These steps use four encryption keys U, D, S and P of which, the key U is a unique key which is different for each subscriber's decoder, the key D is a distribution key which is shared by a group of, say, 100 subscriber's decoders, the key S is a system key which identifies the system which is providing a particular range of services, and the key P is a page key which is used to scramble the coded data pulses which form the teletext information.

The unique key U for each subscriber's decoder is provided integrally ($U_s$) at the decoder. When a new subscriber joins the system to receive one or more services, or an existing subscriber wishes to add or delete services, a unique message U(D,T) is transmitted. This unique message contains inter alia the distribution key D which the subscriber is to share (or already shares), and a table T of the services to which the subscriber is to be permitted access. This unique message is encrypted with the subscriber's unique key U, so that only that subscriber's decoder can decrypt this unique message. The unique message U(D,T) is sent very infrequently so that the table T and the distribution key D are stored $D_s$ and $T_s$ in the subscriber's decoder along with the unique key U. Because it is sent very infrequently, this unique message occupies only an insignificant proportion of the teletext transmission capacity of the system. The blocks $E_1$ and $E_1{}^{-1}$ signify the encryption and decryption of the unique message U(D,T).

The teletext information is transmitted as teletext messages P(Text) which contain successive teletext pages scrambled with the page key P. As its name implies, the page key P pertains to each teletext page and would normally be different for each page. The teletext message P(Text) is descrambled at a subscriber's decoder using the page key P. The blocks S and $S^{-1}$ signify the scrambling and descrambling of the teletext message P(Text).

In order for the teletext message P(Text) to be descrambled at a subscriber's decoder, the page key P has to be present at the decoder. However, when the system has a large number of subscribers it would not be practical to address each subscriber's decoder individually with an auxiliary message containing the page key P for each transmitted scrambled teletext page. Therefore, the different distribution keys are provided for respective groups of subscribers. For each teletext message P(Text), each distribution key D is used to encrypt a first auxiliary message D(S.E) which contains the system key S and also an enabling signal E which is unique to each subscriber in the subscriber group concerned and serves to enable or disable the subscriber's decoder according to, for example, payment or non-payment of the appropriate subscription. The block $E_2$ signifies the encryption of the first auxiliary message D(S.E.). However, within each group of subscribers, different subscribers will have subscribed to different services. Thus, a further conditional selection is required in this respect and this is achieved by transmitting a second auxiliary message S(P,S,N) for each teletext message P(Text). This second auxiliary message is encrypted with the system key S and contains the page key P, the system key S and a service number N which identifies the particular service to which the teletext message P(Text) pertains. The block $E_3$ signifies the encryption of the second auxiliary message S(P,S,N).

The blocks $E_2{}^{-1}$ and $E_3{}^{-1}$ signify the decryption of the first and second auxiliary messages at each subscriber's decoder, by the keys P and S, repsectively. In each decoder, the received service number N is compared (block $C_p$) with the list of service numbers in the subscriber's service table $T_s$ and a first enabling signal $\underline{e}$ is produced if the service number is of a service which is subscribed for. The enabling signal E forms a second enabling signal if the subscriber is not prohibited from receiving the teletext message P(Text). These first and second enabling signals gate (block G) the descramble teletext message into the decoder to make the message available for display or other usuage.

The encryption/decryption and scrambling/descrambling for the above purposes can involve similar procedures. However, the encrypted over-air addressing messages U(D,T), D(S,E) and S(P,S,N) need a much higher level of security than the scrambled teletext message P(Text). One important requirement for encrypting the data si that if any bit is changed the complete message will be totally corrupted after decryption with the correct key. To satisfy this requirement a cipher feedback algorithm has been proposed using a one-way function with multiple encipherments in the form of "rounds". It is proposed to use the same algorithm to scramble the teletext message in a single "round".

Figure 2 of the accompanying drawings shows a block diagram which represents a proposed cipher feedback algorithm. For this algorithm, the key to be used is a 64-bit secret key K which is loaded into a key register KEY-K. A second register REG-R is loaded with a 64-bit secret initial condition number I. Unlike the key numbers, the number I is never changed and it is the same for all encipherements. Preferably, the number I is chosen to be a random number having an impulse autocorrelation function. The number I is loaded into the register REG-R at the beginning of each "round" for both encryption/scrambling and decryption/descrambling.

The key K and the number I are subjected to a one-way function procedure OWF, in which they are modulo-256 added (i.e. without carry) one 8-bit byte at a time by an adder ADD1.

Each of the eight 8-bit outputs from the adder ADD1 is used as an 8-bit input to address a look-up table LUT1 which produces an 8-bit output for each 8-bit input. The eight 8-bit outputs from the look-up table LUT1 undergo a selection process SEL which selects successively a different one of the eight bits from the eight 8-bit outputs. The eight bits which are selected are latched in a latch LAT1 and form an 8-bit output from the one-way function procedure OWF.

The one-way function procedure OWF can include at its output, as shown in dotted lines, an accumulator process in which the latched 8-bit output is treated as a pre-output value and is modulo-256 added by an adder ADD2 with the previous latched 8-bit output which is held for this purpose in a second latch LAT2, followed by a look-up process in which the 8-bit output from the adder ADD2 is applied as an 8-bit input to a look-up table LUT2, an 8-bit output from which then forms the 8-bit resultant output from the one-way function procedure OWF.

A single look-up table can serve as both the look-up tables LUT1 AND LUT2.

Data bytes of 8 bits of teletext messages which are to undergo descrambling are read from the page memory PM in the decoder, exclusive-OR'd (XOR) in parallel with successive 8-bit outputs from the one-way function procedure OWF, and then returned to the page memory PM or outputted from the decoder. This completes the descrambling of teletext messages. Auxiliary messages which are to undergo deencipherment are loaded into an input register REG-IN in bytes of 8 bits in parallel and the exlusive -OR function XOR is performed with each 8-bit byte in turn and successive 8-bit outputs from the one-way function procedure OWF. The result of this exclusive-OR function is loaded into an output register REG-OUT. A switch SW1 signifies the connection of either the page memory PM or the register REG-IN for the exclusive-OR operation (XOR).

The different modes of operation of the cipher feedback algorithm that is, scrambling/descrambling and encryption/decryption, are represented by a 3-position switch SW2. For scrambling and descrambling, this switch SW has a position $\underline{s}$ in which the output from OWF is also fed into the register REG-R to progressively alter the number I one 8-bit byte at a time, as the successive exclusive-OR functions are being performed. For encryption, the switch SW2 has a position $\underline{e}$ in which the output from the exclusive-OR function XOR is fed into the register REG-R to progressively alter the number I one 8-bit byte a time, as the successive exclusive-OR functions are being performed. For decryption, the switch SW2 has a position $\underline{d}$ in which each 8-bit byte fed from the register REG-IN for the exclusive-OR function XOR is also fed into the register REG-R to alter progressively the number I.

When all the data in register REG-IN has been read out and processed and the result loaded into register REG-OUT, one 'round' of encipherment has been completed. In order to produce good encipherment for encryption and decryption, at least three 'rounds' should be performed. Security is improved with increase in the number of 'rounds' performed, and eight rounds are proposed. When a subsequent 'round' is to be performed, the contents of register REG-OUT are loaded into register REG-IN as the initial data for the next 'round'. Preferably, the data is loaded from register REG-OUT to register REG-IN in reverse byte order, so that the byte in the least significant byte position lsb of register REG-OUT is loaded into the most significant byte position msb of register REG-IN, and the byte in the most significant byte position msb of register REG-OUT is loaded into the least significant byte position lsb of register REG-IN.

It is an object of the present invention to provide a suitable method for use in a teletext decoder for implementing the cipher feedback algorithm in respect of descrambling and decryption. The invention also provides a teletext decoder embodying processor means which are programmed to perform the method.

According to the invention there is provided a teletext decoder suitable for receiving and descrambling a teletext message which is composed of at least one teletext page and has been scrambled prior to transmission by performing an exclusive-OR logic operation on each data byte of the page with successive different code bytes to produce scrambled data bytes, which teletext decoder is operable to perform an exclusive-OR logic operation on each scrambled data byte with successive decode bytes, corresponding to said code bytes, to descramble the teletext message, and which teletext decoder is characterised in that each decode byte is produced therein by a method comprising the steps of:-

(a) determining a key composed of $\underline{m}$ bytes each containing $\underline{n}$ bits,

(b) initializing an initial condition number composed of $\underline{m}$ bytes each containing $\underline{n}$ bits,

(c) adding modulo-$2^n$ each key byte and a respective initial condition number byte to produce $\underline{m}$ new bytes each containing $\underline{n}$ bits,

(d) using each of the $\underline{m}$ new bytes in a function to obtain $\underline{m}$ modified new bytes,

(e) selecting a different bit from each of the modified new bytes to obtain a single resultant byte which constitutes a decode byte for the exclusive-OR logic operation,

(f) replacing one of the initial condition number bytes with the single resultant byte to form a new initial condition number, and

(g) repeating steps (c) to (f) until all the data bytes have been descrambled.

In carrying out step (d), it is convenient to use each of the $\underline{m}$ new bytes to address a look-up table to obtain the $\underline{m}$ modified new bytes.

The code bytes used for scrambling the teletext message may have been obtained using a one-way function having one or both of the further steps (h) or (i) set forth below, in which event the method employed in the teletext decoder would also include one or both of these further steps in order to obtain the decode bytes.

(h) adding modulo-$2^n$ each single resultant byte to the preceding single resultant byte to produce a sum byte which now constitutes a decode byte, this further step being performed between steps (e) and (f).

(i) using each single resultant byte or each sum byte, as the case may be, to address a look-up table or otherwise obtain a modified decode byte for the exclusive-OR operation.

The key which is used for descrambling the teletext message is a page key which can be determined from one or more received auxiliary message each data byte of which is decrypted with a respective decryption key using the method steps specified above.

In order that the invention may be more fully understood reference will now further be made by way of example to the accompanying drawings, in which:-

Figure 1, as aforesaid, shows diagrammatically proposed scrambling/descrambling and encryption/decryption steps for subscription teletext;

Figure 2, as aforesaid, shows a block diagram of a proposed cipher feedback algorithm;

Figure 3 is a block diagram of a teletext transmission system of the type referred to;

Figure 4 is a block diagram of a teletext transmission receiver suitable for use in the teletext transmission system of Figure 3;

Figures 5a and 5b when placed together with Figure 5a to the left of Figure 5b show a flow chart giving the steps which are carried out according to the invention by the teletext decoder of the teletext television receiver of Figure 4 in the performance of the cipher feedback algorithm; and,

Figure 5c shows a modification of the flow chart.

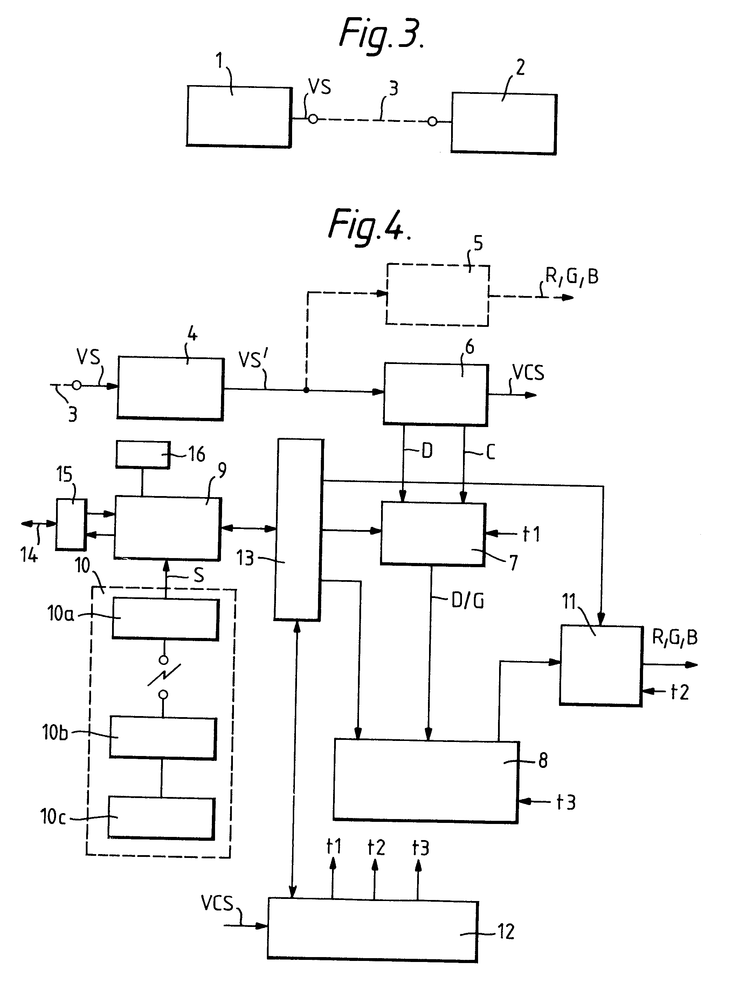

As shown in Figure 3, a teletext transmission system of the type referred to comprises a television transmitter 1 for transmitting a television signal VS to television receivers such as receiver 2 via a conventional over-air broadcast or cable transmission link 3. The transmitter 1 includes in known manner means for producing television picture information, means for producing alpha-numeric text for display or other teletext information, and further means for generating the television video signal VS containing picture signals representative of the picture information and data pulses (which may or may not be scrambled or encrypted) representative of the teletext information, together with the usual synchronising, equalising and blanking pulses which are necessary for the operation of the television receiver. The television receiver 2 comprises the usual amplifying, tuning and i.f. detector circuits at its front end, together with video and data processing circuits as will now be considered with reference to Figure 4.

The television receiver shown in Figure 4 has its front end 4 connected to receive the incoming television video signal VS. For normal picture display by the television receiver, the demodulated video signal VS′ is applied to a colour decoder which produces the R, G and B component signals for the picture display. Time base circuits for a display tube (not shown) receive the usual line and field synchronising pulses from a sync. pulse separator circuit which extracts these synchronising pulses from the video signal VS′. The element 5 represents the colour decoder and these other circuit elements which are provided for conventional picture display.

The demodulated video signal VS′ is also applied to a teletext decoder section of the teletext television receiver which deals with the receipt and display of the alpha-numeric text and other teletext information that is received in digitally coded form. This section comprises a video processor circuit 6 which performs inter alia data slicing for retrieving teletext data pulses D from the video signal VS′. The video processor circuit 6 also produces input data clock pulses C from the data pulses D. The data pulses D are fed together with the clock pulses C to a data acquisition circuit 7 which is operable to feed selected groups D/G of the teletext data pulses to a memory 8 as address and display or other information. The memory 8 has a capacity for storing at least one page of information, comprising a plurality of data rows. The page and row format laid down in the aforementioned "Broadcast Teletext Specification" is assumed.

A logic processor 9 is operable in accordance with select signals S applied to it from a remote control arrangement 10 to control which groups of teletext data pulses are acquired by the data acquisition circuit 7. The arrangement 10 has a receiver part 10a and a remote transmitter part comprising a transmitter 10b and a keypad 10c. The processor 9 is further operable to read out from the memory 8 display information for the selected page, for application to a character generator 11 which is responsive to this display information to provide R, G, B component signals for the display. A timing circuit 12 provides timing signals on connections t1 to t3 for the circuit elements 7, 8 and 11. These circuit elements and the timing circuit 12 are accessed by the processor 9 via an interface circuit 13. the operation of the timing circuit 12 is synchronised with the received video signal VS by a composite pulse signal VCS which contains the line and field synchronising pulses which are separated from the demodulated video signal VS′ in the video processor 6.

The operation of the processor 9 may also be under the control of an external terminal or computer which has access to it via a suitable two-way link 14 and interface 15, for instance an RS232 external link. Teletext information stored in the page memory can then be read out for transmission over this external link, rather than being used for display purposes within the television receiver.

In the teletext television receiver shown in Figure 4, only single line connections have been shown for the interconnections between the various circuit elements for the sake of simplicity. However, it with be apparent to a person skilled in the art that in practice most of these interconnections would be multi-line. For instance, whereas the teletext data pulses D retrieved from the video signal VS′ would be applied serially to the data acquisition circuit 7 over a single connection, serial-to-parallel conversion would take place within this circuit 7, so that the groups D/G of teletext data pulses would be applied to the memory 8 in parallel over a multi-line connection. Also, the connection between the processor 9 and the interface circuit 13 would be a multi-line bus, for instance, a so-called $I^2C$ bus. The processor 9 can be a commercially available microcomputer; e.g. from the MAB 8400 Series (Philips). The circuit elements 7, 11, 12 and 13 can be the integrated circuit EURO CCT type SAA 5240 (Mullard). The circuit element 6 can be the integrated circuit VIP2 type SAA 5230 (Mullard).

Although a composite television receiver for receiving both normal picture information and teletext information is exemplified in Figure 4, it will be appreciated that the teletext decoder section for data acquisition together with the front 4 may be provided as a separate teletext decoder which is adapted to feed either a CRT display monitor or a conventional television receiver, or it can feed a data bus (e.g. an RS232 bus) for application to a computer terminal, as already mentioned.

For the performance of the invention, the television decoder section includes a replaceable module 16 in which is stored a unique key U and other user related information for a subscription teletext service, as discussed previously. The distribution key D is also stored in the module 16. Thus, if the module 16 is made tamper-proof, both the unique key U and the distribution key D would be lost as a result of any tampering. One possible implementation of the module 16 is to include it in a CMOS memory which is energised by a separate battery that is so wired to the memory as to be disconnected if the module is tampered with. In the transmission of subscription teletext information, it is assumed that data bytes for data rows will be scrambled using the techniques discussed previosuly. Normal parity protection, as used for ordinary teletext information, would be applied after the data has been scrambled. The page and row numbers are not affected. Data bytes containing the various encryption messages will be transmitted in ghost rows or in pages not used for display, and would have Hamming error protection applied to them after encryption.

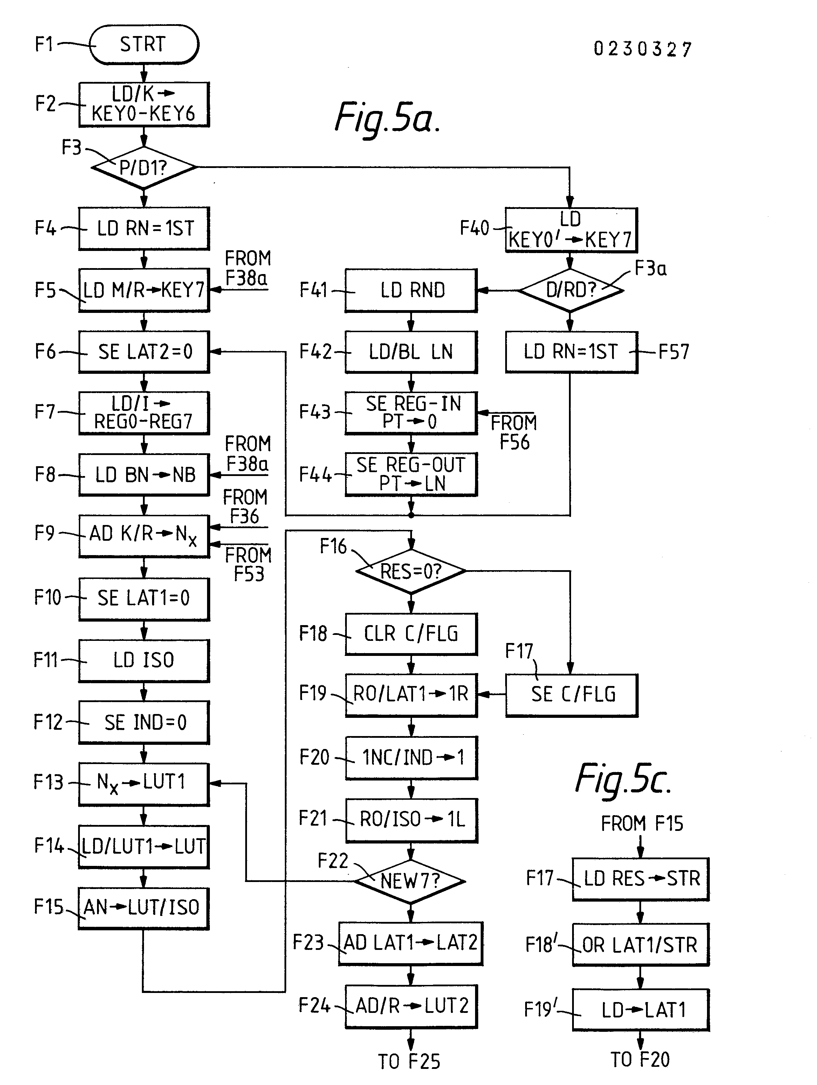

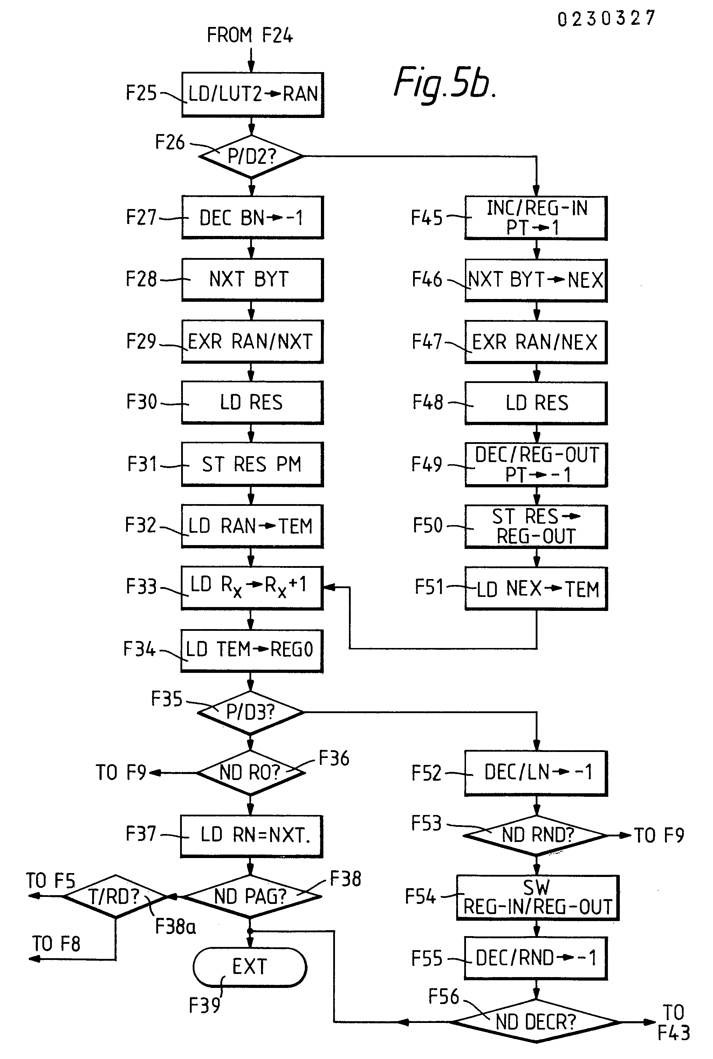

As the teletext decoder section, a selected subscription teletext page is received and stored in the memory 8 in the same manner as for an ordinary teletext page. However, the stored data has to be descrambled using the page key K, whilst the various encryption messages have themselves to be decrypted before the page key K can be determined. The flow chart shown in Figures 5a and 5b represents the operations performed by the processor 9 for carrying out a general cipher feedback algorithm for either page descrambling or key decryption. In this flow chart, the legends in the various boxes have the following significances:-
(F1) STRT:- This is an instruction to enter the algorithm.
(F2) LD/K →:- This is an instruction to load into the key
KEY0-KEY6 register KEY-K the particular key K to be used for descrambling/decryption.
(It is assumed that the key register KEY-K is made up of eight 8-bit registers KEY0-KEY7 of which, only the first seven KEY0-KEY6 are loaded directly with 8-bit bytes that are allocated to the relevant key. The remaining register KEY7 is loaded with an 8-bit byte which, as well be considered, is derived in one way for the page key P and in another way for each of the other keys U, D and S.
(F3) P/D1?:- This is a logic decision for determining on the one hand whether descrambling a page of text is to be carried out, or on the other hand whether decryption of one of the cipher messages U(D, T), D(S, E) and S(P, S, N), or descrambling reformatted data, is to be carried out.
(The particular key which has been loaded in step (F2) provides the information for this logic decision).
(F4) LD RN = 1ST:-When page descrambling is to occur, a register "ROWNUMB' has entered into it the row number for the first data row of a received scrambled page to be descrambled.
(For normal text, a ghost row in the page will indicate which data rows are present in the transmitted page. Only these rows will be descrambled.)
(F5) LD M/R→ KEY 7:-
This is an instruction to load into the register KEY7 the magazine and row address group of the data row to be descrambled.
(This completes the page key P as the key-K which will thus have a different 8-bit byte in the register KEY7 for each data row of a received scrambled page of normal text. Reformatted data is dealt with differently as will be described).
(F6) SE LAT2 = 0:-this is an instruction to set to "0" a register "LATCH2" which corresponds to the latch LAT2 (Fig. 2) that is used in the accummulator process by which successive pre-output values of the one-way function OWF are modulo-256 added to the previous output value.
(F7) LD/1→REG0-REG7:-
This is an instruction to load into the register REG-R the initial condition number I. (In practice, REG-R is made up of eight 8-bit registers REG0-REG7 which receive respective 8-bit bytes of the number I).
(F8) LD BN→NB:-
This is an instruction to load a register "BYTNUMB" with the number of bytes in the data row that is to be descrambled. (This number is provided from ghost row information).
(F9) AD K/R→$N_x$:-
This is an instruction to add modulo-256 the contents of the registers KEY0 to KEY7 with the contents of the registers REG0 to REG7 to produce eight new 8-bit bytes which are stored in respective registers NEW0 to NEW7.
(i.e. add KEY0 to REG0 → NEW0
KEY1 to REG1 → NEW1
KEY7 to REG7 → NEW7.)
(F10) SE LAT1 = 0:-
This is an instruction to set to '0' a register "LATCH1" which corresponds to the latch LAT1 (Fig. 2) in which are recorded the successive single bit values as produced by the selection process SEL (Fig. 2).
(The following steps (F11) to (F22) carry out the selection process SEL.)
(F11) LD ISO:- This is an instruction to load a register "ISOLATE" with an initial value 0000 0001.
(F12) SE IND = 0:-This is an instruction to set to '0' a register "INDEX" which used to count the successive selections performed by the selection process SEL.
(F13) $N_x$→LUT1:-
This is an instruction to use the bytes in each of the registers NEW0 to NEW7 in turn, as selected by the index value in the register "INDEX", to obtain an 8-bit output from the look-up table LUT1.
(F14) LD/LUT1→LUT:-
This is an instruction to load into a register "LUTOUT" the 8-bit output from the look-up table LUT1.

(F15) AN LUT/ISO:-
This is an instruction to perform a logic AND function with the contents of the registers "LUTOUT" and "ISOLATE". (The result of this logic AND function is that the bit position which contains a '1' in the register "ISOLATE' will result in a '1' when the corresponding bit position in the register "LUTOUT" also contains a '1' and will result in a '0' when there is a '0' in this corresponding bit position. The result in all other bit positions will be a '0' irrespective of the other bit values in the register "LUTOUT".)

(F16) RES=0?:- This is a logic decision for determining whether the result of the logic AND function in step (F15) contains a '0' or a '1'.

(F17) SE C/FLG:-This is an instruction to set a carry flag when the decision in step (F16) signifies a '1'. (The result of this instruction is to insert a '1' into the least significant bit position of the register LAT1).

(F18) CLR C/FLG:-
This in an instruction to clear the carry flag when the decision in step (F16) signifies a '0'. (The result of this instruction is that '0' is allowed to remain in the least significant bit position of the register LAT1).

(F19) RO/LAT1→1R:-
This is an instruction to rotate the contents of the register LAT1 one bit position to the right. (The effect of this instruction is to allow a '1' or '0' for the next bit position of the register to be entered in at the least significant bit position when steps (F15) to (F18) are repeated).

(F20) INC/IND →1 :-
This is an instruction to increment by one the register "INDEX".

(F21) RO/ISO →IL:-
This is an instruction to rotate the contents of the register "ISOLATE" one bit position to the left. (The effect of this instruction is to cause the logic AND function of step (F15) to operate on the next higher order bit of the 8-bit byte in the register "LUTOUT").

(F22) NEW7?:- This is a logic decision for determining whether the successive selections of single bits from the contents of the register "LUTOUT" have been completed. (If not, then step (F13) is returned to for the next selection).

The steps (F16), (F17), (F18) AND (F19) may be replaced by the sequence of steps (F17'), (F18') and (F19') shown in Figure 5c. These alternative steps, which provide a simplification in that they dispense with the need for the carry flag, represent the following instructions:-

(F17') LD RES → STR:-
This is an instruction to load into a register "STORE" the result of the logic AND function performed in step (F15).

(F18') OR LAT1/STR:-
This is an instruction to perform a logic OR function with the contents of the registers LAT1 and STR.

(F19') LD → LAT1:-
This is an instruction to load into the register LAT1 the result of the logic OR function performed in step (F18').

(The result of these alternative instructions is that for a given bit position, as determined by the contents of the register "ISOLATE", the contents of the register LAT1 is built-up bit-by-bit, without having to rotate this register progressively one bit position to be right under the control of set and clear carry flag instructions).

(F23) AD LAT1 → LAT2:-
This is an instruction to add modulo-256 the final contents of the register LAT1 to that of the register LAT2 after the selection process has been completed, and to store the result in the register LAT2.

(F24) AD/R → LUT2:-
This is an instruction to use the addition result of step (F23) to obtain an 8-bit output from the look-up table LUT2.

(F25) LD/LUT2 → RAN:-
This is an instruction to load into a register "RANDOM" the 8-bit output from the look-up table LUT2.

(F26) P/D2?:- This is a logic decision for determining whether descrambling a page of text (including a reformatted data page), or decryption of one of the cipher message is being carried out.

(There is now available in the register "RANDOM" an 8-bit byte which constitutes a decode byte which is to be exclusive-OR'd with an 8-bit text data byte from the data row being dealt with. The decode 8-bit byte is then changed and its successor is exclusive-OR'd with the next 8-bit data byte, and so on, until the whole data row has been decoded. The following steps (F27) to (F36) carry out this next stage in the algorithm.)

(F27) DEC/BN → 1 :-
This is an instruction to decrement by one the text byte number register "BYTNUMB".

(F28) NXT BYT:- When page descrambling is being carried out this is an instruction to obtain the next text byte from the page memory in the decoder.

(F29) EXR RAN/NXT :-
This is an instruction to perform an exclusive-OR logic operation on the contents of the register "RANDOM" and the next byte obtained in step (F28).

(F30) LD RES:- This is an instruction to load into a register "RESULT" the result of the exclusive-OR logic operation of step (F29).

(F31) ST RES PM:-
This is an instruction to store in the page memory the contents of the register "RESULT". (These contents form the descrambled text byte.)

(F32) RAN → TEM:-
this is an instruction to load the contents of the register "RANDOM" into a temporary register "TEMPRI".

(F33) LD $R_x$ → $R_{x+1}$:-
This is an instruction to advance by one register the contents of the registers REG0 → REG6:
i.e. move the contents of REG0 → REG1:
REG1 → REG2
REG6 → REG7
(The effect of this is to leave the register REG0 empty so that it can be loaded with new data in the next step (F34), thereby completely changing the value of the number I in the register REG-R.)

(F34) LD TEM → REG0:-
This is an instruction to load the contents of the register "TEMPRI" into the regisiter REG0.

(F35) P/D3?:- This is a logic decision for determining whether descrambling a page of text (including a reformatted data page), or decryption of one of the cipher messages is being carried out.

(F36) ND RO:- When page descrambling is being carried out this is a further logic decision fro determining whether the end of a data row has been reached, as signified by the test byte count in register "BYTNUMB".

(If the end of the data row has not been reached, then step (F9) is returned to and the descrambling of the next text byte commences.)

(F37) LD RN = NXT:-

This is an instruction to load the register "ROWNUMB" with the number of the next data row to be descrambled.

(F38) ND PAG?:- This is a logic decision for determining whether the end of the page being descrambled has been reached. This decision is made on the basis of information in ghost rows of the page, indicating which rows are present in the page (text pages) or the total number of bytes in the page (data pages). (If the end of the page has not been reached, a further logic decision (F38a) is entered into).

(F38a) T/RD?:- This is a logic decision for determining whether the page contains normal text or reformatted data. (If the page contains normal text then step (F5) is returned to and descrambling of the next data row commences).

(F39) EXT:- (This is an instruction to exit the algorithm when the end of the page, as signified by the ghost row information, has been reached.)

The foregoing operations of the algorithm thus provide for page descrambling of a normal text page, one text byte at a time, with the number 1 being modified in respect to each text byte, and the key K being modified in respect of each row of data.

For decryption of one of the cipher messages, the flow chart for the general cipher feedback algorithm has three branch paths containing a number of steps which are separate from the steps used for page descrambling. The first branch path comprises further steps (F40) to (F44), the second branch path comprises further steps (F45) to (F51), and the third branch path comprises further steps (F52) to (F56) all of which will now be considered.

(F40) LD KEY0' → KEY7:-

When the decision from step (F3) is for message decryption or for descrambling of reformatted data to occur, the contents of the register KEY0 are used to address a look-up table and the output value KEY0' from this look-up table is loaded into the register KEY7 to complete the relevant key U, D or S as the key-K.

(F3a) D/RD?:- This is a logic decision for determining whether message decryption or descrambling of reformatted data is to occur as signified by ghost row information. (If a message decryption is to occur, then step (F41) is entered into).

(F41) LD RND:- The number of decryption rounds to be performed is loaded into a register "ROUND".

(F42) LD/BL LN:-The length (i.e. the number of bytes) of the block of data which forms the cipher message that is to be decrypted is loaded into a register "LENGTH".

(F43) SE REG-IN PT → 0:-

This is an instruction to set to '0' an index pointer for the register REG-IN.

(F44) SE REG-OUT PT → LN:-

This is an instruction to set an index pointer for the register REG-OUT to an initial value corresponding to the byte number stored in the register "LENGTH". (Step (F6) is now entered into and the subsequent steps (F6) to (F25) are the same as previously described for page descrambling.)

(F45) INC/REG-IN PT → 1:-

When the decision from step (F26) is for message decryption, the pointer for register "REG-IN" is incremented by one to identify the next byte of data to be dealt with in the register "REG-IN".

(F46) NXT BYT → NEX:-

This is an instruction to read the next byte from the register "REG-IN" and store it in a register "NEXT".

(F47) EXR RAN/NEX:-

This is an instruction to perform an exclusive-OR logic function on the contents of the registers "RANDOM" and "NEXT".

(F48) LD RES:- This is an instruction to load into the register "RESULT", the result of the exclusive-OR logic operation of step (F47).

(F49) DEC/REG-OUT:-

PT → -1 This is an instruction to decrement by one the index pointer for the register REG-OUT.

(F50) ST RES → REG-OUT:-

This is an instruction to store in the register REG-OUT in the position indicated by its index pointer, the contents of the register "RESULT".

(F51) LD NEX → TEM -

This is an instruction to load the contents of the register "RESULT" into the temporary register "TEMPRI".

(Steps (F33) and (F34) are next carried out to change the value of the number I, following which step (F35) is entered.)

(F52) DEC/LN → -1:-

This is an instruction to decrement by one the register "LENGTH" which holds the information giving the length of the block of data being decrypted.

(F53) ND RND?:- This is a logic decision for determining whether the end of the block of data being decrypted has been reached, as signified by the contents of the register "LENGTH".

(If the end of the block of data has not bee reached, then step (F9) is returned to and the decryption of the next data byte commences.)

(F54) SW REG-IN/REG-OUT:-

This is an instruction to exchange the addresses of the two registers REG-IN and REG-OUT, when the previous step (F53) signifies that the end of a decryption round has been reach.

(The effect of this is to make the data in the original register REG-OUT available as data to be decrypted in the next decryption round.)

(F55) DEC/RND →-1:-

This is an instruction to decrement by one the register "ROUND" which holds the information giving the number of decryption rounds which are to be performed.

(F56) ND DECR?:-This is a logic decision for the determining whether the end of message decryption has been reached, as signified by the contents of the register "ROUND".

(If the end of message decryption has not been reached, then step (F43) returned to, followed by step (F44), to reset the index pointers for the "new" registers REG-IN and REG-OUT. The algorithm is exited at step (F39) when message decryption has been completed.)

For descrambling a page of reformatted data, the logic decision in step (F3a) causes a further step (F57):- LD RN = 1ST, to be entered into. This step (F57) corresponds to step (F4) and causes the row number of the first data row of the page concerned to be entered into the register "ROWNUMB" so that this data row is identified for read out from the page memory of the decoder. Step (F6) is entered into from the step (F57) and thereafter steps (F6) to (F38) are carried out as for a normal text page.

When the logic decision in step (F38a) identifies a page of reformatted data, step (F8) is returned to. Thus, the next data row for descrambling is dealt with without any change being made to the key-K. Also, the steps (F6) and (F7) take place only at the start of a descrambling page of formatted data and not at the start of every data row as in the case of descrambling a page of normal text.

**Claims**

1. A teletext decoder suitable for receiving and descrambling a teletext message which is composed of at least one teletext page and has been scrambled prior to transmission by performing an exclusive-OR logic operation on each data byte of the page with successive different code bytes to produce scrambled data bytes, which teletext decoder is operable to perform an exclusive-OR logic operation on each scrambled data byte with successive decode bytes corresponding to said code bytes to descramble the teletext message, and which teletext decoder is characterised in that each decode byte is produced therein by a method comprising the steps of:-

(a) determining a key composed of $m$ bytes each containing $n$ bits,

(b) initialising an initial condition number composed of $m$ bytes each containing $n$ bits,

(c) adding modulo-$2^n$ each key byte and a respective initial condition number byte to produce $m$ new bytes each containing $n$ bits,

(d) using each of the $m$ new bytes in a function to obtain $m$ modified new bytes,

(e) selecting a different bit from each of the modified new bytes to obtain a single resultant byte which constitutes a decode byte for the exclusive-OR logic operation.

(f) replacing one of the initial condition number bytes with the single resultant byte to form a new initial condition-number, and

(g) repeat steps (c) to (f) until all the data bytes have been descrambled.

2. A teletext decoder as claimed in Claim 1, characterised in that step (d) is performed by using each of the $m$ new bytes to address a look-up table to obtain the $m$ modified new bytes.

3. A teletext decoder ad claimed in Claim 1 or Claim 2, characterised in that said method includes the further steps of:-

(h) adding modulo-$2^n$ each single resultant byte to the preceding single resultant byte to produce a sum byte which now constitutes a decode byte, this further step being performed between steps (e) and (f).

4. A teletext decoder as claimed in Claim 1 or Claim 2 or Claim 3, characterised in that said method includes the further step of:-

(i) using each single resultant byte or each sum byte, as the case may be, to address a look-up table or otherwise to obtain a modified decode byte for the exclusive-OR operation.

5. A teletext decoder as claimed in any preceding Claim, characterised in that the key used for descrambling the teletext message is a page key which can be determined from one or more received auxiliary messages which is decrypted with a respective decryption key using the method steps specified.

6. A teletext decoder as claimed Claim 5, characterised in that a magazine and row address group byte which identifies a data row of a teletext page is used as one byte of the page key, so that the page key is changed for descrambling each data row of the page.

7. A teletext decoder as claimed in Claim 5, characterised in that one byte of each key other than the page key is obtained from a look-up table which is addressed for this purpose by a predetermined byte of the key.

8. A teletext decoder as claimed in any preceding Claim, characterised in that step (e) is performed by an AND logic operation using the single resultant byte and an isolating byte which contains in only one bit position a binary '1' value that occupies a different position for each successive new byte that is dealt with.

9. A teletext decoder as claimed in any preceding Claim, characterised in that step (f) is performed by redefining the bytes 1 to m-1 of the initial condition number as bytes 2 to $m$, respectively, and using the single resultant byte as byte 1.

10. A teletext decoder as claimed in Claim 5 or any Claim dependent thereon, characterised in that for decrypting an auxiliary message, a number of decryption rounds are performed, the auxiliary message being loaded initially into an input register from which successive data bytes are read for the exclusive-OR operations the results of which are loaded into an output registers, the roles of the input and output registers being thereafter reversed for successive decryption rounds by an exchanging of addresses of these registers.

Fig.1.

Fig.2.

0230327

1-Ⅳ-PHB 33236

Fig.3.

Fig.4.

0230327

Fig.5a.

0230327

Fig.5c.

3-Ⅳ-PHB 33236

Fig.5b.

0230327

4-Ⅳ-PHB 33236